# EUROPEAN PATENT APPLICATION

(11) **EP 4 296 991 A1**
(43) Date of publication of application: **27.12.2023**
(21) Application number: 22180277.0
(22) Date of filing: 21.06.2022
(51) Int. Cl.: G08G 3/02, G01S 13/86, G01S 13/91, G01S 13/93

(54) **DETECTION OF A RISK OF COLLISION WITH AN OBJECT IN A WATER AREA**

(71) Applicant: BSB Artificial Intelligence GmbH, 4030 Linz (AT)
(72) Inventor: KÖNIG, Nikolaus, 1090 Wien (AT)
(74) Representative: Argyma

(57) **Abstract**

The invention relates to a method for avoiding a collision between a boat and at least one object in a water area, said method comprising the steps of receiving (S3) a sequence of images from the camera module representing at least one object in the water area, detecting (S4) the at least one object in the images, tracking (S5) each object in each image of the sequence of images, said tracking comprising at least determining the bearing of each detected object, recording (S6) the bearing of each tracked object, triggering (S9) an alert when the number of recorded bearing values over a maximum bearing interval overtakes a predetermined detection threshold in order to avoid a collision between the boat and the at least one object.

## Description

### General technical field

The invention relates to boat safety and more particularly to a method and device for avoiding collision between a boat and an object in a water area like e.g., in the ocean or in a lake. The present invention aims in particular at providing a solution of boat-embedded system which allows alerting the skipper of a boat in order to avoid the collision of said boat with an object in a water area.

### State of the art

It is known in the art to equip a boat with a system for detecting objects, like e.g. other boats, and avoid therefore a collision. Common detection systems include a RADAR device which sends waves that can reflect on the objects. Thus, when reflected waves are received by the RADAR device along a particular direction and after a measured time, the RADAR device can detect the direction and the distance of the object. Such type of RADAR device works on day time as well as on night time, but cannot identify the objects otherwise than using their shape.

Another type of boat-embedded device uses a camera for detecting objects.

In a first solution, the camera is of the RGB (Red Green Blue) type, known in the art, and allows manually detecting objects. In other words, the RGB camera generates images which are displayed on a screen and an operator analyses the images displayed on the screen to detect any object that could be dangerous for the boat. However, such system may only be used during day time as images are mainly dark during night time.

In a second solution, the camera is of the thermal type and allows also manually detecting objects on a screen, but in this case, images show a thermal representation of the environment, allowing therefore detecting objects also at night time. However, thermal cameras are expensive.

Furthermore, existing systems allow tracking objects using the distance and an estimation of their course using images generated by a camera, but this solution may prove to be inaccurate and dangerous in some situations if the estimation of the distance of the course is not reliable, for example when images are of poor quality or the state estimation of the camera is not reliable enough. Also, in these solutions, an operator, e.g. the skipper of the boat, might have to monitor the generated images on a screen to follow the objects, which is time-consuming for said operator and prevents him of performing other tasks, which could even be dangerous if the operator is alone on the boat.

There is thus a need for a simple, cheap, reliable and efficient solution that allows to remedy at least partially these drawbacks.

### General presentation of the invention

To this aim, the invention provides a method for avoiding a collision between a boat and at least one object in a water area, said boat comprising an anti-collision system comprising a camera module and a tracking module, said camera module being configured to generate a sequence of images representing said water area and to send said generated sequence of images to said tracking module, said method, operated by the tracking module, comprising the steps of:
- receiving a sequence of images from the camera module, said images representing at least one object in the water area,
- detecting the at least one object in the images,
- tracking each object in each image of the sequence of images, said tracking comprising at least determining the bearing of each detected object,
- recording the bearing value of each tracked object,
- triggering an alert when the number of recorded bearing values over a maximum bearing interval overtakes a predetermined detection threshold in order to avoid a collision between the boat and the at least one object.

The method according to the invention allows to track objects based on the frequency of occurrence of their bearing. The bearing represents the angular difference between the direction of the boat and the object. Hence, when the bearing of an object remains noticeably constant over time, its course might cross the course of the boat. In this case, an alert is triggered to inform the skipper of the boat or to activate the automatic pilot of the boat to avoid collision.

In an embodiment, the bearing is the relative bearing.

In another embodiment, the bearing is the absolute bearing.

In an embodiment, when several objects are being tracked and when the number of recorded bearing values overtakes the predetermined detection threshold over several maximum bearing intervals, the alert is triggered when the gap between two adjacent maximum bearing intervals is greater than a predetermined gap threshold.

Advantageously, wherein the step of tracking comprises also determining the distance of each detected object and the step of triggering is implemented when the number of recorded bearing values over a maximum bearing interval overtakes the predetermined detection threshold and when the determined distance is smaller than a predetermined distance threshold.

In an embodiment, the step of triggering comprises sending a message to trigger an alarm.

In an embodiment, the step of tracking comprises displaying the tracked object on a display screen.

In an embodiment, the alert is a visual alarm and/or a sound alarm.

In an embodiment, the method comprises, between the step of recording and the step of triggering, a step of generating a histogram of the number of recorded bearing values for all the recorded bearings and/or over a predetermined range of bearings.

The predetermined detection threshold depends on the framerate of the images, which may depend itself on the hardware and software. In some embodiments, the predetermined detection threshold ranges between 10 and 100, preferably between 40 and 80. Such values may be adapted for the histogram approach but could be completely different for other approaches.

Advantageously, the images are generated and sent in real time. For example, the sequence of images comprises between 3 and 10 frames per second, preferably for at least 10 seconds.

The invention also relates to a tracking module for avoiding a collision between a boat and at least one object in a water area, said boat comprising an anti-collision system comprising a camera module and said tracking module, said camera module being configured to generate a sequence of images representing said water area and to send said generated sequence of images to said tracking module, said tracking module being configured to:
- receive a sequence of images from the camera module, said images representing at least one object in the water area,
- detect the at least one object in the images,
- track each object in each image of the sequence of images, said tracking comprising at least determining the bearing of each detected object,
- record the bearing value of each tracked object,
- trigger an alert when the number of recorded bearing values over a maximum bearing interval overtakes a predetermined detection threshold in order to avoid a collision between the boat and the at least one object.

In an embodiment, the tracking module is configured to, when several objects are being tracked and when the number of recorded bearing values overtakes the predetermined detection threshold over several maximum bearing intervals, triggering the alert when the gap between two adjacent maximum bearing intervals is greater than a predetermined gap threshold.

In an embodiment, the tracking module is configured to determine the distance of each detected object and to trigger the alert when the number of recorded bearing values over the maximum bearing interval overtakes the predetermined detection threshold and when the determined distance is smaller than a predetermined distance threshold.

In an embodiment, the tracking module is configured to send a message to trigger an alarm.

In an embodiment, the tracking module is configured to display the tracked object on a display screen.

The alert may be a visual alarm and/or a sound alarm.

In an embodiment, the tracking module is configured to generate a histogram of the number of recorded bearing values over a predetermined range of bearing values.

The predetermined detection threshold depends on the framerate of the images, which may depend itself on the hardware and software. In some embodiments, the predetermined detection threshold ranges between 10 and 100, preferably between 40 and 80. Such values may be adapted for the histogram approach but could be completely different for other approaches.

The invention also relates to an anti-collision system for a boat in a water area, said system comprising a camera module and a tracking module as presented here before, said camera module being configured to generate a sequence of images representing said water area and to send said generated sequence of images to said tracking module.

Advantageously, the camera module is configured to generate and send images in real time. For example, the sequence of images comprises between 3 and 10 frames per second, preferably for at least 10 seconds.

The invention also relates to a boat comprising a system as presented here before.

The boat may be e.g., a sailing boat, a racing boat, a ship or any kind of vessel.

In an embodiment, the boat comprises a hull and a mast, wherein the camera module is mounted on said mast. In other embodiments, the camera module may be mounted on any point offering a clear view to the camera(s), preferably a high point.

### FIGURES

Figure 1 schematically illustrates a boat according to the invention and three objects in a water area in top-view.
Figure 2 schematically illustrates an exemplary embodiment of the boat according to the invention.
Figure 3 illustrates an example of histogram of number of bearings over a predetermined bearing range.
Figure 4 illustrates an exemplary embodiment of the method according to the invention.

### DETAILED DESCRIPTION

The collision avoiding system according to the invention allows to detect an object in a water area using a camera module and avoid a collision with said object. The water area may be an ocean, a sea, a lake or any water area suitable for a boat. The boat may be a sailing boat or a motorboat.

### Boat 1

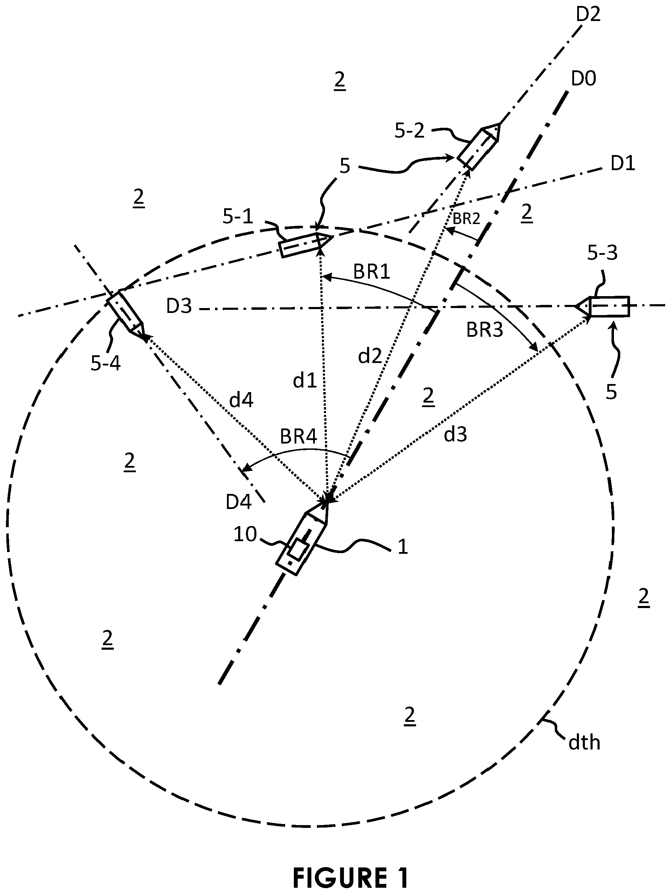

Figure 1 illustrates a boat 1 according to the invention navigating in a water area 2, e.g. the sea, in a direction D0. Four objects 5 also navigate on the water plan 2: a first vessel 5-1, a second vessel 5-2, a third vessel 5-3 and a fourth vessel 5-4.

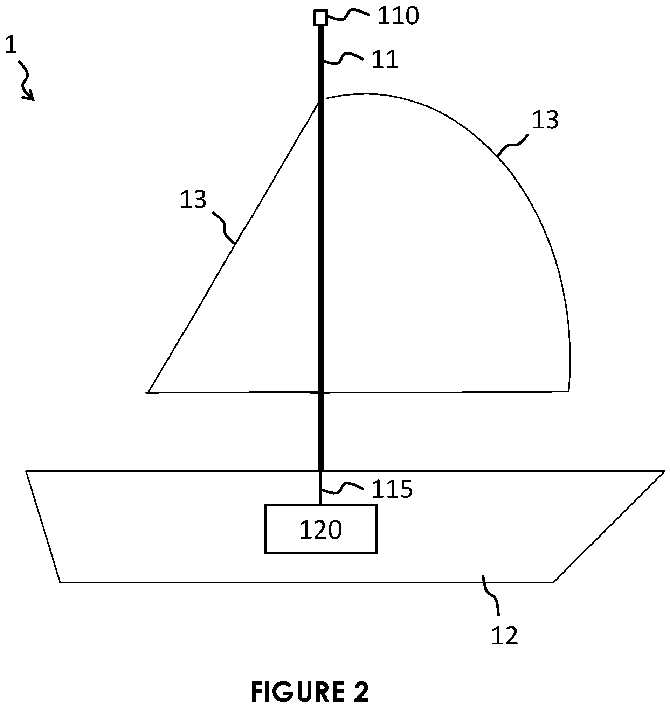

The boat 1 may be for example a sailing boat, as illustrated on figure 2, or any other type of entity which may collide with objects on a water area, even an entity fixed on the land next to a water area. In the non-limiting example of figure 2, the boat 1 comprises a mast 11, a hull 12 and sails 13.

The boat 1 is characterized by its direction D0. In the example of figure 1, the direction of the boat 1 and of each object 5 is linear (i.e., a straight line) for the sake of clarity but, in other embodiments, the direction of the boat 1 and/or the direction of each object 5 might be changing in time (non-linear).

The first vessel 5-1 is characterized by its direction D1, its distance d1 from the boat 1 and its bearing BR1, which represents the angle (for example in degrees) between the direction D0 of the boat 1 and the position of said first vessel 5-1.

The second vessel 5-2 is characterized by its direction D2, its distance d2 from the boat 1 and its bearing BR2, which represents the angle (for example in degrees) between the direction D0 of the boat 1 and the position of said second vessel 5-2.

The third vessel 5-3 is characterized by its direction D3, its distance d3 from the boat 1 and its bearing BR3, which represents the angle (for example in degrees) between the direction D0 of the boat 1 and the position of said third vessel 5-3.

The fourth vessel 5-4 is characterized by its direction D4, its distance d4 from the boat 1 and its bearing BR4, which represents the angle (for example in degrees) between the direction D0 of the boat 1 and the position of said fourth vessel 5-4.

Still in reference to Figure 1, the boat 1 comprises an anti-collision system 10.

### System 10

As illustrated on Figure 2, the anti-collision system 10 comprises a camera module 110 and a tracking module 120.

In this example, the system 10 is mounted in a boat 1, but, alternatively, the system 10 might be mounted in or on any relevant location or element to monitor objects and trigger an alert when the objects 5 are likely to collide with the element embedding the system 10, such as for example a monitoring post on the shore of the water area 2 or a fixed buoy in the water area 2.

The alert may be an alarm for warning people guiding the boat 1 or for warning people outside the boat 1, for example on the vessels 5-1, 5-2, 5-3, 5-4.

### Camera module 110

Preferably, the camera module 110 is mounted on the mast 11 of the boat 1, as in Figure 2, if any, or on any elevated surface. The camera module 110 might be mounted to any adapted surface or location.

The camera module 110 is configured to generate a sequence of images representing the water area 2 and to send said generated sequence of images to said tracking module 120. To this end, the camera module 110 comprises one or several cameras, for example RGB or thermal cameras.

The sequence of images is generated and sent in real time. For example, the sequence may have a frame rate between 3 and 10 frames per second. Preferably, the sequence of images last at least for ten seconds.

### Tracking module 120

In reference to figure 2, the tracking module 120 is mounted in the boat 1 and is configured to communicate with the camera module 110 on a communication link 115, either through wires or wirelessly. In another embodiment, the camera module 110 and the tracking module 120 may be embedded into the same physical equipment (e.g., without the need for the communication link 115).

The tracking module 120 is configured to receive a sequence of images from the camera module 110 on the communication link 115, said images representing the first vessel 5-1, the second vessel 5-2 and the third vessel 5-3 in the water area 2.

The tracking module 120 is configured to detect the first vessel 5-1, the second vessel 5-2 and the third vessel 5-3 in the images.

The tracking module 120 is configured to track the first vessel 5-1, the second vessel 5-2 and the third vessel 5-3 in each image of the sequence of images. By tracking, it is understood that each object 5 is followed in the images of the sequence of images. More precisely, each object 5 is tagged with an identifier and followed along the images and the bearing of each object (the first vessel 5-1, the second vessel 5-2 and the third vessel 5-3) is determined.

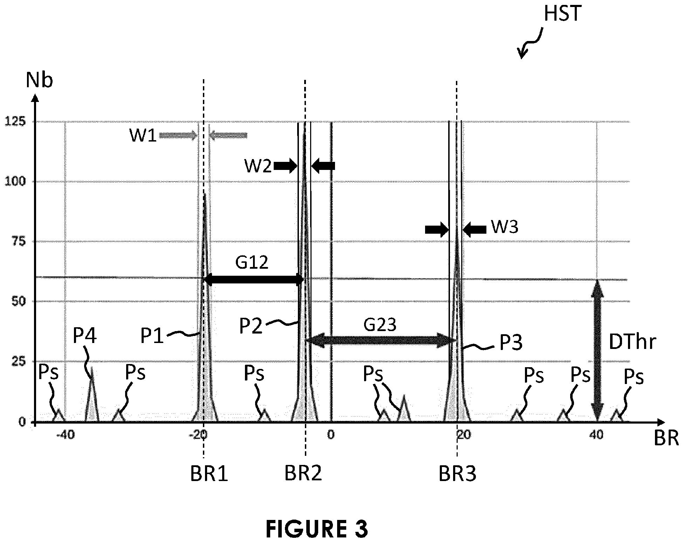

In an embodiment, the relative bearing of the object is used. The relative bearing represents the angle between the direction of the boat 1 (representing the 0°-reference) and the position of the object 5 (for example in degrees) relatively to said direction, clockwise. An object 5 located on the left compared to the direction of the boat 1 will have a negative bearing and an object 5 located on the right compared to the course of the boat 1 will have a positive bearing. For example, in the histogram of Figure 3, peaks of negative bearings correspond to objects 5 detected on the left of the course of the boat 1 and peaks of positive bearings correspond to objects 5 detected on the right of the course of the boat 1.

Alternatively, the absolute bearing could be used. The absolute bearing is the angle between the North (heading 0°) and the position of the object (for example in degrees).

Preferably, the tracking module 120 is configured to determine the distance d1, d2, d3 between the boat 1 and detected each object 5 during the tracking. Advantageously, the distance d1, d2, d3 is computed using the images of the sequence of images in a known manner. Alternatively, the distance d1, d2, d3 may be derived using any other relevant method (e.g. a radar, a lidar, infrared, etc.).

During the tracking over the images of the sequence of images, the tracking module 120 is configured to record the bearing value of each detected objects 5 in each image.

In the present embodiment, the tracking module 120 is configured to generate a histogram representing the number of recorded bearing values over a predetermined range of bearing values. For example, in the histogram of Figure 3, predetermined range of bearing values spreads roughly from -45° to +45°.

The tracking module 120 is configured to trigger an alert when the number of recorded bearing values over a maximum bearing interval overtakes a predetermined detection threshold DThr in order to avoid a collision between the boat 1 and the objects 5.

Advantageously, in this embodiment, as the tracking module 120 determines the distance d1, d2, d3 of each detected object 5 during the tracking, the tracking module 120 is configured to trigger the alert when the number of recorded bearings over a maximum bearing interval MBI overtakes a predetermined detection threshold DThr and when the determined distance d1, d2, d3 is smaller than a predetermined distance threshold dth (figure 1), for example a few tenth of nautical mile.

In the example of Figure 3, the predetermined detection threshold DThr is set to 60.

Preferably, the tracking module 120 is configured to, as several objects 5 are being tracked and when the number of recorded bearings overtakes the predetermined detection threshold DThr over several maximum bearing intervals, triggering the alert when the gap between two adjacent peaks overtaking the predetermined detection threshold DThr is greater than a predetermined gap threshold.

The tracking module 120 may be configured to send a message to trigger an alert. The tracking module 120 may be configured to display the tracked object on a display screen. The alert may be a visual alarm and/or a sound alarm.

### Example of operation

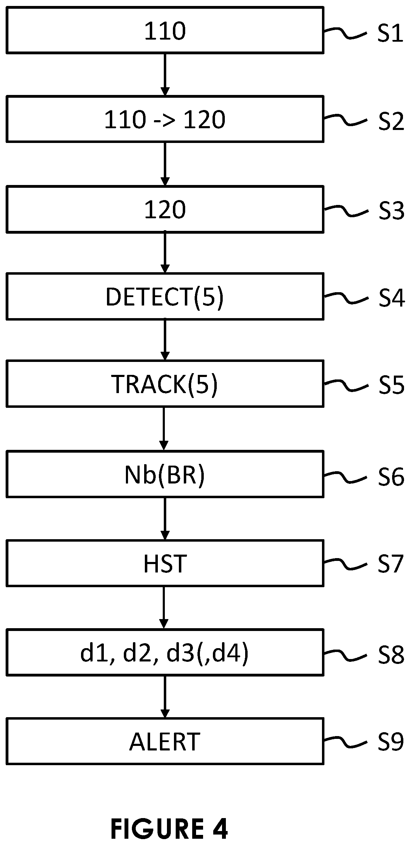

An example of operation is described in relation to figures 3 and 4.

In a step S1, the camera module 110 generates a sequence of images representing the water area 2, at least in front of the boat 1. The sequence of images is sent in real time by the camera module 110 to the tracking module 120 as a sequence of images in a step S2. The tracking module 120 receives the sequence of images sent by the camera module 110 in real time in a step S3.

In a step S4, the tracking module 120 detects the objects 5 that appears in the sequence of images and tracks said detected objects 5 in a step S5. The tracking of objects 5 comprises detecting one or several objects 5 in the images, attributing an identifier to each detected object 5 and determining the bearing BR1, BR2, BR3 and the distance d1, d2, d3 of each detected object 5.

A same object 5 may be detected with different bearing BR1, BR2, BR3 values along the images of the sequence of images, either because of the imprecision of the bearing BR1, BR2, BR3 estimation by the tracking module 120 and/or because the boat 1 and/or the object 5 are actually changing their bearing BR1, BR2, BR3 (change of course, waves, etc.).

In step S6, the tracking module 120 records the number Nb of bearings BR values of the tracked objects 5 and generates a histogram HST representing the number of times each bearing BR value is recorded among the images of the sequence in a step S7. Figure 3 shows an example of such histogram. In this example, the numbers of recordings for different bearing BR values are linked as a graph of peaks P1, P2, P3, P4, Ps and displayed as such, for example by correlation or regression curve.

In this example, the histogram HST comprises four main peaks P1, P2, P3, P4 and some secondary peaks Ps. Each peak P1, P2, P3, P4, Ps is characterized by its height (in terms of number of recorded bearings in the graph) and width (in terms of bearing values range). Two adjacent peaks [P1; P2], [P2; P3] may be characterized by their distance or gap G12, G23 (also in terms of bearing values range). In this example of Figure 3, peaks are considered as main peaks P1, P2, P3, P4 when their height is greater than 15. Main peaks P1, P2, P3, P4 correspond here to vessels 5-1, 5-2, 5-3, 5-4.

The tracking module 120 considers a peak P1, P2, P3 as a tracked object 5 when the number of recordings of a range of bearing values overtakes a predetermined detection threshold DThr. In otherword, the height of the peak P1, P2, P3 shall overtake said predetermined detection threshold DThr. In the example of Figure 3, the predetermined detection threshold DThr is set to 60 and three peaks P1, P2, P3, called object peaks, overtake said predetermined detection threshold DThr.

The tracking module 120 considers that an object peak P1, P2, P3 relates to a single tracked object 5 when the range of bearings of the peak, i.e. the width W1, W2, W3 of the peak P1, P2, P3, is smaller than a maximum bearing interval, e.g. 5°. The width W1, W2, W3 may be measured in a given range of number of bearings, here between 20 and 30 in this non-limitative example, in order to measure the width W1, W2, W3 of the peak P1, P2, P3 while avoiding measurement errors showed at the base of the peak P1, P2, P3 (i.e., below 20 bearings). For example, in the histogram HST of Figure 3, the width W1 of the object peak P1, measured at 15 bearings, is within the maximum range value of 2° of bearing.

Advantageously, the tracking module 120 may consider that two main peaks P1/P2, P2/P3 relate to two different objects, respectively 5-1/5-2, 5-2/5-3, when the gap G12, G23 between said two peaks P1/P2, P2/P3 is greater than a predetermined gap threshold, for example 5°. Otherwise, when the gap G12, G23 between said two peaks P1/P2, P2/P3 is smaller than said predetermined gap threshold, the tracking module 120 may consider that the two main peaks relate to the same object 5.

Simultaneously, the tracking module 120 also monitors the distance of each detected object 5 in a step S8 in order to estimate whether the detected object 5 is moving closer or away of the boat 1.

The tracking module 120 triggers an alert in a step S9 when the bearing of an object 5 remains constant over time (i.e., the associated peak becomes greater) while the distance between the boat 1 and said object 5 becomes smaller, which indicates a high probability of collision as shown for example on Figure 1 with the first vessel 5-1, the second vessel 5-2 and the third vessel 5-3.

In an embodiment, the alert is triggered only when the distance between the boat 1 and the detected object 5 is smaller than a predetermined collision distance, for example 0.5 nautical mile.

Different types of alerts may be triggered depending on the distance: e.g., visual alert only for remote objects 5 and visual and sound alert for close objects 5 within the collision bearing range.

Upon triggering of the alert, the skipper can manoeuvre the boat in order to avoid a collision between the boat 1 and any dangerous object 5.

The triggering of the alert for close objects 5 within the collision bearing range may be sent to an autopilot module, which can modify the trajectory of the boat 1 in order to avoid a collision between the boat 1 and said object 5.

## Claims

1. A method for avoiding a collision between a boat (1) and at least one object (5 ; 5-1, 5-2, 5-3) in a water area (2), said boat (1) comprising an anti-collision system (10) comprising a camera module (110) and a tracking module (120), said camera module (110) being configured to generate a sequence of images representing said water area (2) and to send said generated sequence of images to said tracking module (120), said method, operated by the tracking module (120), comprising the steps of:
- receiving (S3) a sequence of images from the camera module (110), said images representing at least one object (5 ; 5-1, 5-2, 5-3) in the water area (2),
- detecting (S4) the at least one object (5 ; 5-1, 5-2, 5-3) in the images,
- tracking (S5) each object (5 ; 5-1, 5-2, 5-3) in each image of the sequence of images, said tracking comprising at least determining the bearing (BR1, BR2, BR3) of each detected object (5 ; 5-1, 5-2, 5-3),
- recording (S6) the bearing (BR1, BR2, BR3) of each tracked object (5 ; 5-1, 5-2, 5-3),
- triggering (S9) an alert when the number of recorded bearing (BR1, BR2, BR3) values over a maximum bearing interval overtakes a predetermined detection threshold (DThr) in order to avoid a collision between the boat (1) and the at least one object (5 ; 5-1, 5-2, 5-3).

2. The method according to claim 1, wherein, when several objects (5 ; 5-1, 5-2, 5-3) are being tracked and when the number of recorded bearing (BR1, BR2, BR3) values overtakes the predetermined detection threshold over several bearing intervals being smaller than the maximum bearing interval, the alert is triggered (S9) when the gap (G12, G23) between two adjacent such bearing intervals is greater than a predetermined gap threshold.

3. The method according to any of the preceding claims, wherein the step of tracking (S5) comprises also determining (S8) the distance (d1, d2, d3) of each detected object (5 ; 5-1, 5-2, 5-3) and the step of triggering (S9) is implemented when the number of recorded bearing values over the maximum bearing interval overtakes the predetermined detection threshold (DThr) and when the determined distance (d1, d2, d3) is smaller than a predetermined distance threshold (dth).

4. The method according to any of the preceding claims, wherein the step of triggering (S9) comprises sending a message to trigger an alarm.

5. The method according to any of the preceding claims, wherein the step of tracking comprises displaying the tracked object (5 ; 5-1, 5-2, 5-3) on a display screen.

6. The method according to any of the preceding claims, wherein the alert is a visual alarm and/or a sound alarm.

7. The method according to any of the preceding claims, comprising, between the recording (S6) and the triggering (S9), generating (S7) a histogram (HST) of the number of recorded bearing (BR1, BR2, BR3) values over a predetermined range of bearing (BR1, BR2, BR3) values.

8. A tracking module (120) for avoiding a collision between a boat (1) and at least one object (5 ; 5-1, 5-2, 5-3) in a water area (2), said boat (1) comprising an anti-collision system (10) comprising a camera module (110) and said tracking module (120), said camera module (110) being configured to generate a sequence of images representing said water area (2) and to send said generated sequence of images to said tracking module (120), said tracking module (120) being configured to:
- receive a sequence of images from the camera module (110), said images representing at least one object (5 ; 5-1, 5-2, 5-3) in the water area (2),
- detect the at least one object (5 ; 5-1, 5-2, 5-3) in the images,
- track each object (5 ; 5-1, 5-2, 5-3) in each image of the sequence of images, said tracking comprising at least determining the bearing (BR1, BR2, BR3) of each detected object (5 ; 5-1, 5-2, 5-3),
- record the bearing (BR1, BR2, BR3) of each tracked object (5 ; 5-1, 5-2, 5-3),
- trigger an alert when the number of recorded bearing (BR) values over a maximum bearing interval overtakes a predetermined detection threshold (DThr) in order to avoid a collision between the boat (1) and the at least one object (5 ; 5-1, 5-2, 5-3).

9. A tracking module (120) according to the preceding claim, configured to, when several objects (5 ; 5-1, 5-2, 5-3) are being tracked and when the number of recorded bearing (BR) values overtakes the predetermined detection threshold (DThr) over several bearing intervals being smaller than the maximum bearing interval, triggering the alert when the gap (G12, G23) between two adjacent such bearing intervals is greater than a predetermined gap threshold.

10. A tracking module (120) according to any of claims 8 or 9, configured to determine the distance (d1, d2, d3) of each detected object (5 ; 5-1, 5-2, 5-3) and to trigger the alert when the number of recorded bearing (BR) values over the maximum bearing interval overtakes the predetermined detection threshold (DThr) and when the determined distance (d1, d2, d3) is smaller than a predetermined distance threshold (dth).

11. A tracking module (120) according to any of claims 8 to 10, configured to send a message to trigger an alarm.

12. A tracking module (120) according to any of claims 8 to 11, configured to display the tracked object (5 ; 5-1, 5-2, 5-3) on a display screen.

13. A tracking module (120) according to any of claims 8 to 12, further configured to generate a histogram (HST) of the number of recorded bearing (BR) values over a predetermined range of bearing (BR) values.

14. An anti-collision system (10) for a boat (1) in a water area (2), said system (10) comprising a camera module (110) and a tracking module (120) according to any one of the preceding claims 9 to 13, said camera module (110) being configured to generate a sequence of images representing said water area (2) and to send said generated sequence of images to said tracking module (120).

15. A boat (1) comprising a system (10) according to the preceding claim.
